# EUROPEAN PATENT APPLICATION

(11) **EP 4 708 613 A1**
(43) Date of publication of application: **11.03.2026**
(21) Application number: 24855435.4
(22) Date of filing: 19.06.2024
(51) Int. Cl.: H02J 7/00, B60L 53/00

(54) **CHARGING CIRCUIT BOARD AND VEHICLE**

(30) Priority: 18.08.2023 CN 202311052407
(71) Applicant: ZHEJIANG ZEEKR INTELLIGENT TECHNOLOGY CO., LTD., Ningbo, Zhejiang 315899 (CN); VIRIDI E-MOBILITY TECHNOLOGY (NINGBO) CO., LTD., Ningbo, Zhejiang 315336 (CN); Zhejiang Geely Holding Group Co., Ltd., Hangzhou, Zhejiang 310051 (CN)
(72) Inventor: ZHANG, Jiaping, Ningbo, Zhejiang 315899 (CN); CHEN, Deting, Ningbo, Zhejiang 315899 (CN); LIU, Gang, Ningbo, Zhejiang 315899 (CN); WANG, Yuanyuan, Ningbo, Zhejiang 315899 (CN)
(74) Representative: Michalski Hüttermann & Partner Patentanwälte mbB
(86) International application number: PCT/CN2024/100213
(87) International publication number: WO 2025/039706

(57) **Abstract**

Disclosed are a charging circuit board and a vehicle. The charging circuit board includes a first reserved area, a first resistor, a second reserved area, a wake-up module, a third reserved area, a sampling module, a first power supply module, and a main control module. An enable terminal of the first power supply module is connected to an output terminal of the wake-up module, an input terminal of the first power supply module is connected to a preset power supply, and a first output terminal of the first power supply module is connected to a wake-up switch module, the other end of the third resistor, and the main control module. Under a first charging standard, a second resistor is disposed in the first reserved area; and under a second charging standard, the wake-up switch module is disposed in the second reserved area, the third resistor is disposed in the third reserved area, and the wake-up switch module is in a turn-on state during a sleep state. The main control module is configured to obtain a connection state of a charging connection confirmation terminal through sampling performed by the sampling module. The charging circuit board of the present disclosure can reduce research and development, and testing costs, and can reduce material management costs.

## Description

### CROSS-REFERENCE TO RELATED APPLICATIONS

The present disclosure claims priority to Chinese Patent Application No. 202311052407.4, entitled "CHARGING CIRCUIT BOARD AND VEHICLE", and filed on August 18, 2023, which is incorporated herein by reference in its entirety.

### TECHNICAL FIELD

The present disclosure relates to the field of vehicle technologies, and in particular, to a charging circuit board and a vehicle.

### BACKGROUND

At present, for a slow charging (i.e., AC charging) conductive charging system of electric vehicles, there are mainly four national or regional standards worldwide: China, Europe, North America and Japan. For one of connector insertion signals/plug-in signals (i.e., a CC signal of the Chinese national standard or PP signals of the European, American, and Japanese standards), a corresponding circuit needs to be designed for the vehicle to detect and identify the connector insertion signal and the corresponding power signal of a charging connector. In addition, the four regional standards have relatively similar principles for a charging pilot circuit of a slow charging connector (or a slow charging gun).

In the related art, the charging interface circuits in different regions have poor flexibility in switching, different circuits need to be designed to adapt to the controllers, and these circuits and the controller need to be tested, resulting in higher research and development (R&D) and testing costs. In addition, different circuits to adapt to the controllers will also introduce more materials, resulting in higher material management costs.

### SUMMARY

The present disclosure intends to address at least one of the technical problems in the related art to some extent. To this end, a first objective of the present disclosure is to provide a charging circuit board, which, by replacing devices in a reserved area, enables sampling of slow charging pilot signals compliant with two regional standards, namely, Chinese/European standards and North American/Japanese standards, thereby reducing R&D and testing costs, and lowering material management costs.

A second objective of the present disclosure is to provide a vehicle.

To achieve the above objectives, in a first aspect of embodiments of the present disclosure, there is provided a charging circuit board, including: a first reserved area, a first resistor, a second reserved area, a wake-up module, a third reserved area, a sampling module, a first power supply module, and a main control module; where the first reserved area is configured for a second resistor to be disposed, one end of the second resistor is connected to a charging connection confirmation terminal, the other end of the second resistor is connected to both one end of the first resistor and an input terminal of the wake-up module, and the other end of the first resistor is connected to a preset power supply; the second reserved area is configured for a wake-up switch module to be disposed, and the wake-up switch module is connected in parallel with the second resistor; the third reserved area is configured for a third resistor to be disposed, one end of the third resistor is connected to both the charging connection confirmation terminal and an input terminal of the sampling module, and an output terminal of the sampling module is connected to the main control module; an enable terminal of the first power supply module is connected to an output terminal of the wake-up module, an input terminal of the first power supply module is connected to the preset power supply, and a first output terminal of the first power supply module is connected to the wake-up switch module, the other end of the third resistor and the main control module; under a first charging standard, the second resistor is disposed in the first reserved area, the wake-up module is configured to output a wake-up signal to the enable terminal of the first power supply module based on a level of the charging connection confirmation terminal via the second resistor, the first power supply module is configured to supply power to the main control module based on the wake-up signal to wake up the main control module, and the main control module is configured to obtain a connection state of the charging connection confirmation terminal through sampling performed by the sampling module; and under a second charging standard, the wake-up switch module is disposed in the second reserved area, the third resistor is disposed in the third reserved area, the wake-up switch module is in a turn-on state during a sleep state, the wake-up module is configured to output a wake-up signal to the enable terminal of the first power supply module based on a level of the charging connection confirmation terminal via the wake-up switch module, the first power supply module is configured to, based on the wake-up signal, supply power to the wake-up switch module to turn off the wake-up switch module, supply power to the main control module to wake up the main control module, and supply power to the third resistor, and the main control module is configured to obtain the connection state of the charging connection confirmation terminal through the sampling performed by the sampling module.

In the charging circuit board according to the embodiment of the present disclosure, under the first charging standard, the second resistor is disposed in the first reserved area, the wake-up module is configured to output the wake-up signal to the enable terminal of the first power supply module based on the level of the charging connection confirmation terminal via the second resistor, the first power supply module is configured to supply power to the main control module based on the wake-up signal to wake up (or activate) the main control module, and the main control module is configured to obtain the connection state of the charging connection confirmation terminal through sampling performed by the sampling module; and under the second charging standard, the wake-up switch module is disposed in the second reserved area and the third resistor is disposed in the third reserved area, the wake-up switch module is in the turn-on state during the sleep state, the wake-up module is configured to output a wake-up signal to the enable terminal of the first power supply module based on the level of the charging connection confirmation terminal via the wake-up switch module, the first power supply module is configured to, based on the wake-up signal, supply power to the wake-up switch module to turn off the wake-up switch module, supply power to the main control module to wake up the main control module, and supply power to the third resistor, and the main control module is configured to obtain the connection state of the charging connection confirmation terminal through sampling performed by the sampling module. Therefore, the charging circuit board can realize the sampling of the slow charging pilot signals for the two regional standards (i.e., the Chinese or European standard and American or Japanese standard) by replacing the devices in the reserved areas, thereby reducing the R&D and testing costs, and reducing the material management costs.

In addition, the charging circuit board according to the above embodiment of the present disclosure may also have the following additional technical features.

According to an embodiment of the present disclosure, the wake-up module includes: a wake-up level conversion circuit, connected to both the other end of the second resistor and the wake-up switch module; where under a first charging standard, the wake-up level conversion circuit is configured to output an edge signal based on the level of the charging connection confirmation terminal via the second resistor; and under the second charging standard, the wake-up level conversion circuit is configured to output an edge signal based on the level of the charging connection confirmation terminal via the wake-up switch module; and a trigger circuit, which is connected to both the wake-up level conversion circuit and the enable terminal of the first power supply module, and is configured to generate the wake-up signal based on the edge signal.

According to an embodiment of the present disclosure, the wake-up module further includes: a trigger clear circuit connected to both the main control module and the trigger circuit; where the main control module is configured to output a clear enable signal to the trigger clear circuit when entering a sleep state, the trigger clear circuit is configured to generate a trigger clear signal based on the clear enable signal, and the trigger circuit is configured to generate and output a sleep signal to the enable terminal of the first power supply module based on the trigger clear signal; where the first power supply module is configured to, based on the sleep signal, stop supplying the power to the main control module under the first charging standard, and stop supplying the power to the wake-up switch module, the main control module and the third resistor under the second charging standard.

According to an embodiment of the present disclosure, the charging circuit board further includes a sampling switch module, which is connected between the charging connection confirmation terminal and the input terminal of the sampling module, and a power supply terminal of the sampling switch module is connected to the second output terminal of the first power supply module; where the first power supply module is configured to: supply power to the sampling switch module based on the wake-up signal to enable the sampling switch module to be in a turn-on state, and stop supplying the power to the sampling switch module based on the sleep signal to enable the sampling switch module to be in a turn-off state.

According to an embodiment of the present disclosure, the charging circuit board further includes a second power supply module, an input terminal of the second power supply module is connected to the preset power supply, and an output terminal of the second power supply module is connected to the wake-up module to supply power to the wake-up module.

According to an embodiment of the present disclosure, the wake-up switch module includes a first switch and a second switch, a first terminal of the first switch is connected to the charging connection confirmation terminal, a second terminal of the first switch is connected to the wake-up module, a first terminal of the second switch is connected to a control terminal of the first switch, the control terminal of the first switch is further connected to the preset power supply, a second terminal of the second switch is grounded, and a control terminal of the second switch is connected to the first output terminal of the first power supply module.

According to an embodiment of the present disclosure, the wake-up level conversion circuit includes a third switch, a first terminal of the third switch is connected to the preset power supply, a second terminal of the third switch is connected to the trigger circuit, and a control terminal of the third switch is connected to the one end of the first resistor, the other end of the second resistor, and the wake-up switch module.

According to an embodiment of the present disclosure, the trigger circuit includes a flip-flop, a first input terminal of the flip-flop is connected to the wake-up level conversion circuit, and an output terminal of the flip-flop is connected to the enable terminal of the first power supply module.

According to an embodiment of the present disclosure, the trigger clear circuit includes a fourth switch, a first terminal of the fourth switch is connected to a second input terminal of the flip-flop, a second terminal of the fourth switch is grounded, and a control terminal of the fourth switch is connected to the main control module.

According to an embodiment of the present disclosure, the sampling switch module includes a fifth switch, a first terminal of the fifth switch is connected to the charging connection confirmation terminal, a second terminal of the fifth switch is connected to the sampling module, and a control terminal of the fifth switch is connected to the second output terminal of the first power supply module.

To achieve the above objectives, in a second aspect of embodiments of the present disclosure, there is provided a vehicle, including the charging circuit board described above.

The vehicle according to the embodiments of the present disclosure can reduce the R&D and testing costs and lower the material management costs through the above charging circuit board.

Additional aspects and advantages of the present disclosure will be set forth in part in the following description, and in part will be apparent from the description, or may be learned by practice of the present disclosure.

### BRIEF DESCRIPTION OF DRAWINGS

FIG. 1 is a schematic block diagram of a charging circuit board according to an embodiment of the present disclosure.
FIG. 2 is a schematic block diagram of a charging circuit board according to an embodiment of the present disclosure.
FIG. 3 is a schematic circuit diagram of a charging circuit board according to an embodiment of the present disclosure.
FIG. 4 is a schematic block diagram of a vehicle according to an embodiment of the present disclosure.

### DETAILED DESCRIPTION

Embodiments of the present disclosure are described in detail below, and examples of the embodiments are shown in the accompanying drawings, in which the same or similar reference numerals represent the same or similar elements or elements having the same or similar functions throughout. The embodiments described below with reference to the accompanying drawings are illustrative and intended to explain the present disclosure, and should not be construed as limiting the present disclosure.

The charging circuit board and the vehicle provided by the embodiments of the present disclosure will be described below with reference to the accompanying drawings.

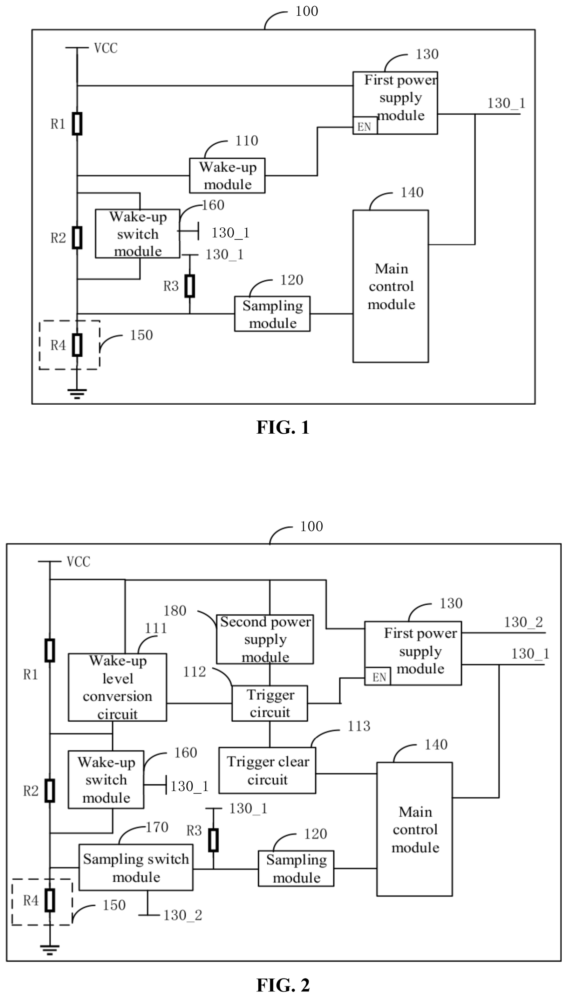

FIG. 1 is a schematic block diagram of a charging circuit board according to an embodiment of the present disclosure.

As shown in FIG. 1, a charging circuit board 100 according to an embodiment of the present disclosure includes a first reserved area, a first resistor R1, a second reserved area, a wake-up module 110, a third reserved area, a sampling module 120, a first power supply module 130, and a main control module 140.

The first reserved area is configured for a second resistor R2 to be disposed, one end of the second resistor R2 is connected to a charging connection confirmation terminal 150, the other end of the second resistor R2 is connected to both one end of the first resistor R1 and an input terminal of the wake-up module 110, and the other end of the first resistor R1 is connected to a preset power supply VCC; the second reserved area is configured for a wake-up switch module 160 to be disposed, and the wake-up switch module 160 is connected in parallel with the second resistor R2; the third reserved area is configured for a third resistor R3 to be disposed, one end of the third resistor R3 is connected to both the charging connection confirmation terminal 150 and an input terminal of the sampling module 120, and an output terminal of the sampling module 120 is connected to the main control module 140; an enable terminal of the first power supply module 130 is connected to an output terminal of the wake-up module 110, an input terminal of the first power supply module 130 is connected to the preset power supply VCC, and a first output terminal of the first power supply module 130 is connected to the wake-up switch module 160, the other end of the third resistor R3 and the main control module 140. Under a first charging standard, the second resistor R2 is disposed in the first reserved area, and the wake-up module 110 is configured to output a wake-up signal to the enable terminal of the first power supply module 130 based on a level of the charging connection confirmation terminal 150 via the second resistor R2. The first power supply module 130 is configured to supply power to the main control module 140 based on the wake-up signal to activate the main control module 140, and the main control module 140 is configured to obtain the connection state of the charging connection confirmation terminal 150 through sampling performed by the sampling module 120. Under a second charging standard, the wake-up switch module 160 is disposed in the second reserved area, the third resistor R3 is disposed in the third reserved area, and the wake-up switch module 160 is in a turn-on state during a sleep state, so that the wake-up module 110 is configured to output a wake-up signal to the enable terminal of the first power supply module 130 based on a level of the charging connection confirmation terminal 150 via the wake-up switch module 160, the first power supply module 130 is configured to, based on the wake-up signal, supply power to the wake-up switch module 160 to disconnect the wake-up switch module 160, supply power to the main control module 140 to activate the main control module 140, and supply power to the third resistor R3, and the main control module 140 is configured to obtain the connection state of the charging connection confirmation terminal 150 through sampling performed by the sampling module 120. The preset power supply VCC may be a 12V direct-current power supply, the first power supply module 130 may convert a 12V direct-current voltage into a 5V direct-current voltage, the first charging standard refers to Chinese or European charging standard, and the second charging standard refers to American or Japanese charging standard.

Specifically, under the Chinese or European charging standard, the main control module 140 samples the pilot signal using a 12V pull-up source. Under the American or Japanese standard charging standard, the main control module 140 samples the pilot signal using a 5V pull-up source. In the charging circuit board 100 of the embodiment of the present disclosure, by replacing the devices in the reserved areas, the sampling of the slow charging pilot signals compliant with the two regional standards (i.e., the Chinese or European standard and the American or Japanese standard) can be realized, thereby reducing the R&D, testing and management costs.

Specifically, when the charging standard is the Chinese or European charging standard, the second resistor R2 may be mounted in the first reserved area, where a resistance value of the second resistor R2 may be 0 ohms, and no device is mounted in the second reserved area and the third reserved area. When the charging connector (or charging gun) is connected, the level of the charging connection confirmation terminal 150 changes, the changed level signal is transmitted to the wake-up module 110 via the second resistor R2, and the wake-up module 110 generates a wake-up signal, and outputs the wake-up signal to the enable terminal of the first power supply module 130, enabling the first power supply module 130 to convert the 12V direct-current voltage output by the preset power supply VCC into the 5V direct-current voltage, and to supply power to the main control module 140, thereby activating the main control module 140. The main control module 140 obtains the connection state of the charging connection confirmation terminal 150 based on the voltage signal sampled by the sampling module 120, further obtaining the connector insertion state of the charging connector and the power capability of the charging connector, and enabling the charging handshake function.

When the charging standard is the American or Japanese charging standard, the wake-up switch module 160 may be mounted in the second reserved area, and the third resistor R3 may be mounted in the third reserved area, where a resistance value of the third resistor R3 may be 330 ohms, and no device is mounted in the first reserved area. When the charging connector is connected, the level of the charging connection confirmation terminal 150 changes, the changed level signal is transmitted to the wake-up module 110 via the wake-up switch module 160 to generate a wake-up signal, and the wake-up signal is output to the enable terminal of the first power supply module 130, enabling the first power supply module 130 to convert the 12V direct-current voltage output by the preset power supply VCC into the 5V direct-current voltage, and to supply power to the wake-up switch module 160, the third resistor R3 and the main control module 140. At this point, the wake-up switch module 160 turns off, and the main control module 140 is activated. The main control module 140 obtains the connection state of the charging connection confirmation terminal 150 based on the voltage signal sampled by the sampling module 120, and in combination with the 5V voltage, further obtaining the connector insertion state of the charging connector and the power capability of the charging connector, and enabling the charging handshake function.

In some embodiments of the present disclosure, as shown in FIG. 1, the charging connection confirmation terminal 150 includes a fourth resistor R4, where one end of the fourth resistor R4 is grounded, and the other end of the fourth resistor R4 is connected to the second resistor R2. When the charging connector is inserted, the fourth resistor R4 is connected; when the charging connector is not inserted, the fourth resistor R4 is disconnected, resulting in infinite resistance at the position of the fourth resistor R4. When the charging standard is Chinese or European charging standard, the resistance value of the fourth resistor R4 includes: 3.3 k, 1.5 k, 680Ω, 220Ω, 100Ω, or the like; when the charging standard is the American or Japanese charging standard, the resistance value of the fourth resistor R4 includes: 2.7 k, 480Ω, 150Ω, or the like; and different resistance values represent the connector insertion states of the charging connector and the power capabilities of the charging connector.

According to an embodiment of the present disclosure, as shown in FIG. 2, the wake-up module 110 includes a wake-up level conversion circuit 111 and a trigger circuit 112. The wake-up level conversion circuit 111 is connected to the other end of the second resistor R2 and the wake-up switch module 160; under the first charging standard, the wake-up level conversion circuit 111 outputs an edge signal based on a level of the charging connection confirmation terminal 150 via the second resistor R2; under the second charging standard, the wake-up level conversion circuit 111 outputs an edge signal based on a level of the charging connection confirmation terminal 150 via the wake-up switch module 160. The trigger circuit 112 is connected to the wake-up level conversion circuit 111 and the enable terminal of the first power supply module 130, and the trigger circuit 112 generates a wake-up signal based on the edge signal.

Specifically, when the charging connector is connected, the charging connection confirmation terminal 150 and the first resistor R1 perform voltage division, the level of the charging connection confirmation terminal 150 changes, and the wake-up level conversion circuit 111 converts this level signal into a jump signal with a rising edge and transmits the jump signal to the trigger circuit 112. The trigger circuit 112, upon receiving the jump signal with the rising edge, sets its output signal to a high state and latches the output signal in the high state; similarly, when the charging connector is pulled out, a jump signal with a falling edge is generated, the wake-up level conversion circuit 111 outputs an edge signal to the trigger circuit 112, and the trigger circuit 112 sets its output signal to a high state and latches the output signal in the high state. In this way, the wake-up signal is generated. Under the first charging standard, the level signal is transmitted to the wake-up level conversion circuit 111 through the second resistor R2; and under the second charging standard, the level signal is transmitted to the wake-up level conversion circuit 111 through the wake-up switch module 160. Therefore, the functions of "connector insertion" wake-up and "connector unplugging" wake-up can be realized.

According to an embodiment of the present disclosure, as shown in FIG. 2, the wake-up module 110 further includes a trigger clear circuit 113, and the trigger clear circuit 113 is connected to both the main control module 140 and the trigger circuit 112. When the main control module 140 needs to enter a sleep mode, the main control module 140 outputs a clear enable signal to the trigger clear circuit 113, the trigger clear circuit 113 generates a trigger clear signal based on the clear enable signal, and the trigger circuit 112 generates a sleep signal based on the trigger clear signal, which is sent to the enable terminal of the first power supply module 130. Under the first charging standard, the first power supply module 130 stops supplying power to the main control module 140 based on the sleep signal; and under the second charging standard, the first power supply module 130 stops supplying power to the wake-up switch module 160, the main control module 140 and the third resistor R3.

Specifically, to meet a low power consumption requirement of the entire vehicle, the main control module 140 enables the vehicle to enter sleep mode even when the connector insertion signal of the charging connector remains present after the vehicle is fully charged. When the vehicle needs to enter sleep mode, the main control module 140 outputs a clear enable signal to the trigger clear circuit 113, the trigger clear circuit 113 generates a trigger clear signal and transmits the trigger clear signal to the trigger circuit 112, and the trigger circuit 112 generates a sleep signal and transmits the sleep signal to the enable terminal of the first power supply module 130, so that the first power supply module 130 no longer converts a 12V direct-current voltage into a 5V direct-current voltage, and the first power supply module 130 stops supplying power to the main control module 140 under the first charging standard, and stops supplying power to the wake-up switch module 160, the main control module 140, and the third resistor R3 under the second charging standard. Therefore, the output of the wake-up signal is stopped, and the vehicle can enter the sleep mode even when the connector insertion signal of the charging connector remains present after the vehicle is fully charged.

According to an embodiment of the present disclosure, as shown in FIG. 2, the charging circuit board 100 described above further includes a sampling switch module 170, the sampling switch module 170 is connected between the charging connection confirmation terminal 150 and the input terminal of the sampling module 120, and a power supply terminal of the sampling switch module 170 is connected to a second output terminal of the first power supply module 130. The first power supply module 130 supplies power to the sampling switch module 170 based on the wake-up signal, enabling the sampling switch module 170 to be in a turn-on state, and the first power supply module 130 stops supplying power to the sampling switch module 170 based on the sleep signal, enabling the sampling switch module 170 to be in a turn-off state.

Specifically, when the charging connector is connected, the level of the charging connection confirmation terminal 150 changes, and the wake-up module 110 outputs the wake-up signal to the enable terminal of the first power supply module 130. Therefore, the first power supply module 130 converts the 12V direct-current voltage output by the preset power supply VCC into the 12V direct-current voltage, and supplies power to the sampling switch module 170 through the second output terminal, so that the sampling switch module 170 is in a turn-on state, and the entire sampling path is turned on. When the system enters the sleep mode, the sleep signal is transmitted to the enable terminal of the first power supply module 130, causing both the first output terminal and the second output terminal of the first power supply module 130 to stop outputting a high level. That is, the first power supply module 130 stops supplying power to the sampling switch module 170, enabling the sampling switch module 170 to be in a turn-off state, thereby further reducing static power consumption.

According to an embodiment of the present disclosure, as shown in FIG. 2, the charging circuit board 100 described above further includes a second power supply module 180. An input terminal of the second power supply module 180 is connected to the preset power supply VCC, and an output terminal of the second power supply module 180 is connected to the wake-up module 110 to supply power to the wake-up module 110. The second power supply module 180 may be an LDO, may convert a 12V voltage output by the preset power supply VCC into a 5V voltage, and may continuously supply power to the wake-up module 110 during sleep.

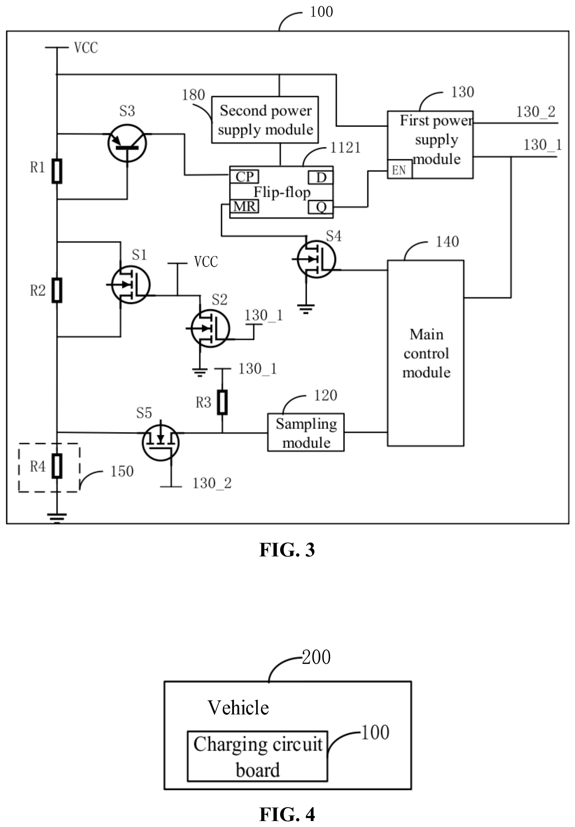

According to an embodiment of the present disclosure, as shown in FIG. 3, the wake-up switch module 160 includes a first switch S1 and a second switch S2. A first terminal of the first switch S1 is connected to the charging connection confirmation terminal 150, a second terminal of the first switch S1 is connected to the wake-up module 110, a first terminal of the second switch S2 is connected to a control terminal of the first switch S1, the control terminal of the first switch S1 is further connected to the preset power supply VCC, a second terminal of the second switch S2 is grounded, and a control terminal of the second switch S2 is connected to the first output terminal of the first power supply module 130. The first switch S1 and the second switch S2 may be N-type MOS transistors or NPN-type triode.

Specifically, as shown in FIG. 3, under the second charging standard, when the charging connector is not connected, that is, the fourth resistor R4 is not connected to the circuit, the control terminal (gate) of the first switch S1 is pulled up to the voltage of the preset power supply VCC, and the first terminal (drain) of the first switch S1 is left floating without forming a circuit path. When the charging connector is connected, the fourth resistor R4 is connected to the circuit, the second terminal of the first switch S1 is pulled down to the ground by the fourth resistor R4, the level of the charging connection confirmation terminal 150 changes, and the wake-up module 110 outputs a wake-up signal to the enable terminal of the first power supply module 130, so that the first power supply module 130 converts the 12V direct-current voltage output by the preset power supply VCC into a 5V direct-current voltage, and supplies power to the control terminal of the second switch S2, the third resistor R3 and the main control module 140, causing the second switch S2 to be turned on, which shorts the control terminal of the first switch S1 to the ground through the second switch S2, thereby turning the first switch S1 off, and disconnecting the charging connection confirmation terminal 150 from the wake-up module 110. Therefore, it can be ensured that the system can be woken up by the connector insertion when the system is adapted to the American or Japanese standard, and after being woken up, the 12V voltage of the preset power supply VCC pulled up is disconnected, so that the sampling module 120 is pulled up by the 5V voltage. When the charging connector is not pulled out and the vehicle is in the sleep state, the first output terminal of the first power supply module 130 no longer supplies power to the control terminal of the second switch S2, the second switch S2 is turned off, and the first switch S1 is in the turn-on state, so that the wake-up switch module 160 is in the turn-on state during the sleep state.

According to an embodiment of the present disclosure, as shown in FIG. 3, the wake-up level conversion circuit 111 includes a third switch S3, a first terminal of the third switch S3 is connected to the preset power supply VCC, a second terminal of the third switch S3 is connected to the trigger circuit 112, and a control terminal of the third switch S3 is connected to one end of the first resistor R1, the other end of the second resistor R2 and the wake-up switch module 160. The third switch S3 may be a PNP-type triode.

According to an embodiment of the present disclosure, as shown in FIG. 3, the trigger circuit 112 includes a flip-flop 1121, a first input terminal of the flip-flop 1121 is connected to the wake-up level conversion circuit 111, and an output terminal of the flip-flop 1121 is connected to the enable terminal of the first power supply module 130.

Specifically, as shown in FIG. 3, when the charging connector is connected, the fourth resistor R4 is connected to the circuit, the first resistor R1 and the fourth resistor R4 divides the voltage in the circuit, the voltage of the control terminal (base) of the third switch S3 is pulled down, so that the third switch S3 is turned on, and the preset power supply VCC transmits the voltage to the first input terminal of the flip-flop 1121 through the third switch S3. The first input terminal of the flip-flop 1121 generates a rising edge signal, the output terminal of the flip-flop 1121 outputs and maintains a high level , which is transmitted to the enable terminal of the first power supply module 130 to wake up the first power supply module 130, so that the first power supply module 130 converts the voltage of the preset power supply VCC and supplies power to the main control module 140 and other devices. When the charging connector is pulled out, the fourth resistor R4 is disconnected from the circuit, and the voltage of the control terminal (base) of the third switch S3 is pulled up, so that the third switch S3 is turned off, the first input terminal of the flip-flop 1121 generates a falling edge signal, the output terminal of the flip-flop 1121 outputs and maintains a high level , which is transmitted to the enable terminal of the first power supply module 130 to wake up the first power supply module 130, enabling the first power supply module 130 to convert the voltage of the preset power supply VCC and supply power to the main control module 140 and other devices.

According to an embodiment of the present disclosure, as shown in FIG. 3, the trigger clear circuit 113 includes a fourth switch S4, a first terminal of the fourth switch S4 is connected to a second input terminal of the flip-flop 1121, a second terminal of the fourth switch S4 is grounded, and a control terminal of the fourth switch S4 is connected to the main control module 140. The fourth switch S4 may be an N-type MOS transistor or a P-type MOS transistor.

Specifically, as shown in FIG. 3, taking the fourth switch S4 being an N-type MOS transistor as an example, when the sleep mode is required, the main control module 140 may output a high level signal to the control terminal of the fourth switch S4, enabling the fourth switch S4 to be turned on. The voltage at the second input terminal of the flip-flop 1121 is pulled down, so that the high level at the output terminal of the flip-flop 1121 can be cleared. Consequently, the first power supply module 130 no longer converts the 12V direct-current voltage into the 5V direct-current voltage, and the first power supply module 130 stops supplying power to devices such as the main control module 140, so that the wake-up source is removed, and the system enters the sleep mode. Similarly, when the fourth switch S4 is a P-type MOS transistor, the main control module 140 may output a low level signal to the control terminal of the fourth switch S4.

It should be noted that the flip-flop 1121 may be a D flip-flop, or other types of flip-flops or trigger circuits may be used, such as an RS flip-flop. When the flip-flop 1121 is the D flip-flop, the first input terminal of the flip-flop 1121 is a CP pin, the output terminal of the flip-flop 1121 is a Q pin, and the second input terminal of the flip-flop 1121 is an MR pin.

According to an embodiment of the present disclosure, as shown in FIG. 3, the sampling switch module 170 includes a fifth switch S5, a first terminal of the fifth switch S5 is connected to the charging connection confirmation terminal 150, a second terminal of the fifth switch S5 is connected to the sampling module 120, and a control terminal of the fifth switch S5 is connected to the second output terminal of the first power supply module 130. The fifth switch S5 may be an N-type MOS transistor.

Specifically, when the charging connector is connected and the system is woken up, the second output terminal of the first power supply module 130 may output a high level signal, such as a 12V voltage, to the control terminal of the fifth switch S5, so that the fifth switch S5 is turned on, and the sampling module 120 is connected to the charging connection confirmation terminal 150 to sample the signal of the charging connector. When the system is in the sleep mode, the second output terminal of the first power supply module 130 no longer outputs the high level signal, so that the fifth switch S5 is turned off, and the sampling module 120 is disconnected from the charging connection confirmation terminal 150, thereby preventing leakage current from the preset power supply VCC to the ground, and further reducing the static power consumption of the system.

It should be noted that, in FIG. 1 to FIG. 3, the enable terminal of the first power supply module 130 is represented by EN, the first output terminal of the first power supply module 130 is represented by 130_1, and the second output terminal of the first power supply module 130 is represented by 130_2.

In summary, in the charging circuit board according to the embodiments of the present disclosure, under the first charging standard, the second resistor is disposed in the first reserved area, the wake-up module is configured to output the wake-up signal to the enable terminal of the first power supply module based on the level of the charging connection confirmation terminal via the second resistor, the first power supply module is configured to supply power to the main control module based on the wake-up signal to wake up (or activate) the main control module, and the main control module is configured to obtain the connection state of the charging connection confirmation terminal through sampling performed by the sampling module; under the second charging standard, the wake-up switch module is disposed in the second reserved area and the third resistor is disposed in the third reserved area , the wake-up switch module is in the turn-on state during the sleep state, the wake-up module is configured to output the wake-up signal to the enable terminal of the first power supply module based on the level of the charging connection confirmation terminal via the wake-up switch module, the first power supply module is configured to, based on the wake-up signal, supply power to the wake-up switch module to turn off the wake-up switch module, supply power to the main control module to wake up the main control module, and supply power to the third resistor, and the main control module is configured to obtain the connection state of the charging connection confirmation terminal through sampling performed by the sampling module. Therefore, the charging circuit board can realize the sampling of the slow charging pilot signals for the two regional standards (i.e., the Chinese or European standard and American or Japanese standard) by replacing the devices in the reserved areas, thereby reducing the R&D and testing costs, and reducing the material management costs.

Corresponding to the above embodiments, the present disclosure further provides a vehicle.

FIG. 4 is a schematic block diagram of a vehicle according to an embodiment of the present disclosure.

As shown in FIG. 4, a vehicle 200 according to an embodiment of the present disclosure includes the charging circuit board 100 described above.

The vehicle according to the embodiments of the present disclosure can reduce R&D and testing costs and reduce material management costs through the charging circuit board described above.

It should be noted that the logic and/or steps represented in the flowcharts or described in other manners herein, for example, may be regarded as a sequencing list of executable instructions for implementing logical functions, and may be specifically implemented in any computer-readable medium, so as to be used by an instruction execution system, apparatus, or device (such as a computer-based system, including a system of a processor, or other systems that can obtain instructions from the instruction execution system, apparatus, or device and execute the instructions), or used in combination with the instruction execution system, apparatus, or device. In terms of this specification, a "computer readable medium" may be any apparatus that may include, store, communicate, broadcast, or transmit a program, so that the apparatus can be used by the instruction execution system, apparatus, or device or can be used in combination with the instruction execution system, apparatus, or device. More specific examples (a non-exhaustive list) of the computer readable medium are as follows: an electrical connection part (an electronic device) having one or more wires, a portable computer disk box (a magnetic device), a random access memory (RAM), a read-only memory (ROM), an erasable programmable read-only memory (EPROM or Flash memory), an optical fiber device, and a portable compact disc read-only memory (CDROM). In addition, the program can be obtained in an electronic manner, for example, by performing optical scanning on the paper or other medium, and then performing editing and interpretation, or performing processing in other suitable manners if necessary, and then the program can be stored in a computer memory. Therefore, the computer readable medium may further be paper on which the program can be printed, or other suitable medium.

It should be understood that various parts of the present disclosure may be implemented by using one or a combination of hardware, software, or firmware. In the foregoing implementations, multiple steps or methods may be implemented by using software or firmware stored in memory and executed by a suitable instruction execution system. For example, similar to another implementation, if the steps or methods are implemented by using the hardware, any one or a combination of the following common technologies in the art may be used: a discrete logic circuit having a logic gate circuit to implement a logic function for a data signal, an application-specific integrated circuit having an appropriate combination logic gate circuit, a programmable gate array (PGA), a field programmable gate array (FPGA), etc.

In the present disclosure, terms such as "an embodiment," "some embodiments," "an example," "a specific example," or "some examples," means that a particular feature, structure, material, or characteristic described in connection with the embodiment or example is included in at least one embodiment or example of the present disclosure. In the present disclosure, schematic expressions of the above terms do not necessarily refer to the same embodiment or example. Moreover, the described particular features, structures, materials, or characteristics may be combined in a suitable manner in any one or more embodiments or examples.

In addition, the terms "first" and "second" are merely used for descriptive purposes, and cannot be understood as indicating or implying relative importance or the number of indicated technical features. Therefore, features defined with "first" and "second" may explicitly or implicitly include at least one of the features. In the description of the present disclosure, "a plurality of" means at least two, such as two, three, etc., unless otherwise specifically defined.

In the present disclosure, unless otherwise expressly specified and limited, the terms "mounted", "coupled", "connected", "fixed" and the like should be understood in a broad sense, and may refer to, for example, a fixed connection, a detachable connection, or an integral connection; may refer to a mechanical connection or an electrical connection; may refer to a direct connection or an indirect connection through an intervening medium; may refer to an internal communication between two elements or an interaction relationship between two elements, unless otherwise expressly limited. For those of ordinary skill in the art, the specific meanings of the above terms in the present disclosure can be understood according to specific situations.

Although embodiments of the present disclosure have been shown and described above, it would be appreciated by those skilled in the art that the above embodiments are illustrative, cannot be construed to limit the present disclosure, and changes, modifications, alternatives and variations can be made in the above embodiments without departing from scope of the present disclosure.

## Claims

1. A charging circuit board, comprising: a first reserved area, a first resistor, a second reserved area, a wake-up module, a third reserved area, a sampling module, a first power supply module and a main control module; wherein,
the first reserved area is configured for a second resistor to be disposed, one end of the second resistor is connected to a charging connection confirmation terminal, the other end of the second resistor is connected to both one end of the first resistor and an input terminal of the wake-up module, and the other end of the first resistor is connected to a preset power supply;
the second reserved area is configured for a wake-up switch module to be disposed, and the wake-up switch module is connected in parallel with the second resistor;
the third reserved area is configured for a third resistor to be disposed, one end of the third resistor is connected to both the charging connection confirmation terminal and an input terminal of the sampling module, and an output terminal of the sampling module is connected to the main control module; and
an enable terminal of the first power supply module is connected to an output terminal of the wake-up module, an input terminal of the first power supply module is connected to the preset power supply, and a first output terminal of the first power supply module is connected to the wake-up switch module, the other end of the third resistor, and the main control module; wherein,
under a first charging standard, the second resistor is disposed in the first reserved area, the wake-up module is configured to output a wake-up signal to the enable terminal of the first power supply module based on a level of the charging connection confirmation terminal via the second resistor, the first power supply module is configured to supply power to the main control module based on the wake-up signal to wake up the main control module, and the main control module is configured to obtain a connection state of the charging connection confirmation terminal through sampling performed by the sampling module; and
under a second charging standard, the wake-up switch module is disposed in the second reserved area, the third resistor is disposed in the third reserved area, the wake-up switch module is in a turn-on state during a sleep state, the wake-up module is configured to output a wake-up signal to the enable terminal of the first power supply module based on a level of the charging connection confirmation terminal via the wake-up switch module, the first power supply module is configured to, based on the wake-up signal, supply power to the wake-up switch module to turn off the wake-up switch module, supply power to the main control module to wake up the main control module, and supply power to the third resistor, and the main control module is configured to obtain the connection state of the charging connection confirmation terminal through the sampling performed by the sampling module.

2. The charging circuit board according to claim 1, wherein the wake-up module comprises:
a wake-up level conversion circuit connected to both the other end of the second resistor and the wake-up switch module, wherein under the first charging standard, the wake-up level conversion circuit is configured to output an edge signal based on the level of the charging connection confirmation terminal via the second resistor; and under the second charging standard, the wake-up level conversion circuit is configured to output an edge signal based on the level of the charging connection confirmation terminal via the wake-up switch module; and
a trigger circuit connected to both the wake-up level conversion circuit and the enable terminal of the first power supply module, and configured to generate the wake-up signal based on the edge signal.

3. The charging circuit board according to claim 2, wherein the wake-up module further comprises:
a trigger clear circuit connected to both the main control module and the trigger circuit;
wherein the main control module is configured to output a clear enable signal to the trigger clear circuit when entering a sleep state, the trigger clear circuit is configured to generate a trigger clear signal based on the clear enable signal, and the trigger circuit is configured to generate and output a sleep signal to the enable terminal of the first power supply module based on the trigger clear signal; wherein the first power supply module is configured to, based on the sleep signal, stop supplying the power to the main control module under the first charging standard, and stop supplying the power to the wake-up switch module, the main control module and the third resistor under the second charging standard.

4. The charging circuit board according to claim 3, further comprising:
a sampling switch module connected between the charging connection confirmation terminal and the input terminal of the sampling module, wherein a power supply terminal of the sampling switch module is connected to a second output terminal of the first power supply module;
wherein the first power supply module is configured to: supply power to the sampling switch module based on the wake-up signal to enable the sampling switch module to be in a turn-on state, and stop supplying the power to the sampling switch module based on the sleep signal to enable the sampling switch module to be in a turn-off state.

5. The charging circuit board according to claim 4, further comprising a second power supply module, wherein an input terminal of the second power supply module is connected to the preset power supply, and an output terminal of the second power supply module is connected to the wake-up module to supply power to the wake-up module.

6. The charging circuit board according to any one of claims 1 to 5, wherein the wake-up switch module comprises a first switch and a second switch, a first terminal of the first switch is connected to the charging connection confirmation terminal, a second terminal of the first switch is connected to the wake-up module, a first terminal of the second switch is connected to a control terminal of the first switch, the control terminal of the first switch is further connected to the preset power supply, a second terminal of the second switch is grounded, and a control terminal of the second switch is connected to the first output terminal of the first power supply module.

7. The charging circuit board according to any one of claims 2 to 5, wherein the wake-up level conversion circuit comprises a third switch, a first terminal of the third switch is connected to the preset power supply, a second terminal of the third switch is connected to the trigger circuit, and a control terminal of the third switch is connected to the one end of the first resistor, the other end of the second resistor, and the wake-up switch module.

8. The charging circuit board according to any one of claims 3 to 5, wherein the trigger circuit comprises a flip-flop, a first input terminal of the flip-flop is connected to the wake-up level conversion circuit, and an output terminal of the flip-flop is connected to the enable terminal of the first power supply module.

9. The charging circuit board according to claim 8, wherein the trigger clear circuit comprises a fourth switch, a first terminal of the fourth switch is connected to a second input terminal of the flip-flop, a second terminal of the fourth switch is grounded, and a control terminal of the fourth switch is connected to the main control module.

10. The charging circuit board according to claim 4, wherein the sampling switch module comprises a fifth switch, a first terminal of the fifth switch is connected to the charging connection confirmation terminal, a second terminal of the fifth switch is connected to the sampling module, and a control terminal of the fifth switch is connected to the second output terminal of the first power supply module.

11. A vehicle, comprising the charging circuit board according to any one of claims 1 to 10.
